# EUROPEAN PATENT APPLICATION

(11) **EP 2 852 259 A1**
(43) Date of publication of application: **25.03.2015**
(21) Application number: 14157856.7
(22) Date of filing: 05.03.2014
(51) Int. Cl.: H05B 37/02

(54) **Lighting control system and lighting control method**

(30) Priority: 20.09.2013 JP 2013195061
(71) Applicant: Toshiba Lighting & Technology Corporation, Yokosuka-shi Kanagawa 237-8510 (JP)
(72) Inventor: YAMAMOTO, Hisashi, Kanagawa, 237-8510 (JP); KIKUTA, Sayaka, Kanagawa, 237-8510 (JP)
(74) Representative: Bokinge, Ole

(57) **Abstract**

According to one embodiment, a lighting control system includes a determination unit which determines presence of a person in any one area among the plurality of areas based on a detection result of the human detection sensor; and a control unit which performs a control of turning on a lighting apparatus which is arranged in the one area with a first light amount, when a determination result that a person is present in the one area is obtained in the determination unit, and performs a control of turning on a lighting apparatus which is arranged in each area neighboring the one area with a second light amount which is equal to or smaller than the first light amount, when a person is present in the one area for a first predetermined time.

## Description

### FIELD

Embodiments described herein relate generally to a lighting control system and a lighting control method.

### BACKGROUND

In the related art, there is a lighting control system that is used in a building or a room in which a local lighting control can be done.

Specifically, for example, in a lighting control system in which a lighting control in a plurality of areas in which a lighting apparatus is provided in each area is performed based on a detection result of a human detection sensor, a system in which a lighting control is performed so that a presence of a person in one area is detected by the human detection sensor, and then a lighting apparatus in the one area and a lighting apparatus in another or other areas neighboring the one area are simultaneously turned on is used in the related art.

However, in the above described lighting control in the related art, there is a problem that a lighting apparatus is unnecessarily turned on in other areas even when stay time of a person in one area is short, for example.

Therefore, embodiments provide a lighting control system and a lighting control method in which an appropriate lighting control can be performed based on a detection result of presence or absence of a person in a plurality of areas.

### BRIEF DESCRIPTION OF THE DRAWINGS

FIG. 1 is a configuration diagram which illustrates a lighting control system according to an embodiment.
FIG. 2 is a diagram which illustrates an example of an arrangement state of a lighting apparatus and a human detection sensor according to the embodiment.
FIG. 3 is a flowchart illustrating a lighting control which is performed in the lighting control system according to the embodiment.
FIG. 4 is a diagram which illustrates an example of areas as targets of the lighting control using the lighting control system according to the embodiment.

### DETAILED DESCRIPTION

In general, according to one embodiment, there is provided a lighting control system which performs a lighting control with respect to each lighting apparatus arranged in a plurality of areas that are within a detection range of a human detection sensor, the system including a determination unit which determines presence of a person in any one area among the plurality of areas based on a detection result of the human detection sensor; and a control unit which performs a control of turning on a lighting apparatus which is arranged in the one area with a first light amount, when a determination result that a person is present in the one area is obtained by the determination unit, and performs a control of turning on a lighting apparatus which is arranged in each area neighboring the one area with a second light amount which is equal to or smaller than the first light amount, when a person is present in the one area for a first predetermined time.

According to another embodiment, there is provided a lighting control method for performing a lighting control with respect to each lighting apparatus which is arranged in a plurality of areas included in a detection range of a human detection sensor, the method including determining presence of a person in any one area among the plurality of areas; and controlling turning on of a lighting apparatus which is arranged at the one area with a first light amount, when a determination result that a person is present in the one area is obtained in the determining, and controlling turning on of a lighting apparatus which is arranged in each area neighboring the one area with a second light amount which is equal to or smaller than the first light amount, when a person is present in the one area for a first predetermined time.

Hereinafter, embodiments will be described with reference to drawings.

### Configuration

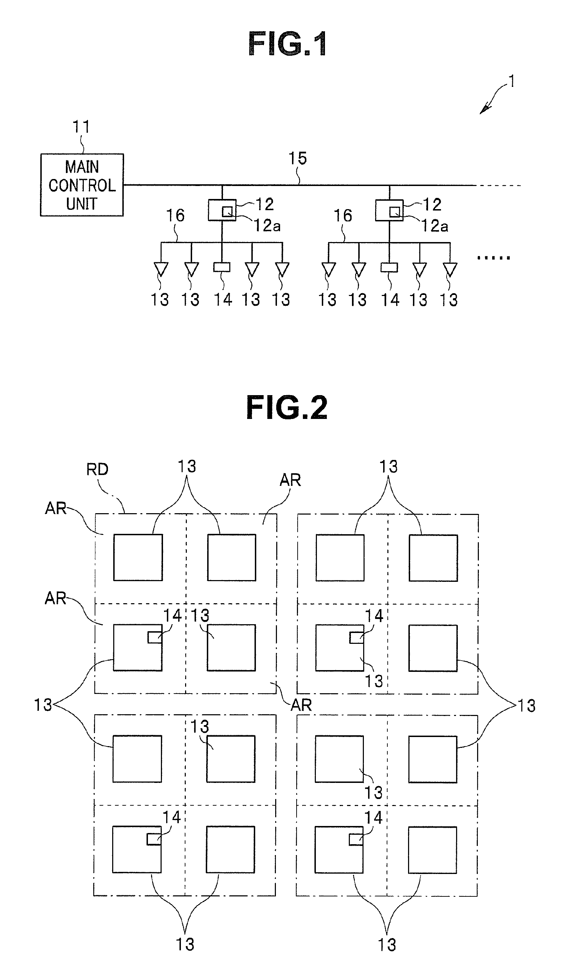

FIG. 1 is a configuration diagram of a lighting control system according to an embodiment. A lighting control system 1 includes a main control unit 11, an area controller 12, a lighting apparatus 13, and a human detection sensor 14.

The main control unit 11 is connected to a plurality of the area controllers 12 through a signal line 15. In addition, the main control unit 11 is configured so as to perform a comprehensive control with respect to the plurality of area controllers 12 based on information which is input through the signal line 15.

The area controller 12 includes a timer 12a which can perform a clocking operation, and a memory (not shown) in which a program which performs a control with respect to the plurality of lighting apparatuses 13, or the like, is stored. In addition, the area controller 12 is connected to the plurality of lighting apparatuses 13 and the human detection sensor 14 through a signal line 16. In addition, the area controller 12 is configured so as to determine presence or absence of a person in a detection range of the human detection sensor 14 based on a detection signal which is input through the signal line 16. In addition, the area controller 12 is configured so as to perform lighting controls of the plurality of lighting apparatuses 13 which are connected through the signal line 16 based on a determination result on presence or absence of a person in the detection range of the human detection sensor 14, and time information which is obtained from a clocking operation of the timer 12a. Here, the determination on the presence or absence of a person may be performed using the main control unit 11, or the human detection sensor 14, and the timer 12a may be provided in the main control unit 11, or the human detection sensor 14.

The lighting apparatus 13 includes, for example, a light emitting unit such as an LED, and is configured so as to emit illumination light with a light amount corresponding to a control of the area controller 12 which is connected through the signal line 16.

The human detection sensor 14 includes, for example, an infrared sensor, or the like, and is configured so as to detect presence or absence of a person in a predetermined detection range, generate a detection signal denoting the detected result, and output the generated detection signal to the area controller 12 through the signal line 16.

Here, the lighting apparatus 13 and the human detection sensor 14 are respectively arranged on a ceiling in a building or a room so as to have an arrangement state which is illustrated in FIG. 2. FIG. 2 is a diagram which illustrates an example of arrangement states of the lighting apparatus and the human detection sensor according to the embodiment.

Specifically, at least one of the lighting apparatuses 13 is, for example, arranged at each area AR which is surrounded with a dotted line and a dot and dashed line in FIG. 2. In addition, the human detection sensor 14 includes, for example, a detection range RD which is denoted by the dashed line in FIG. 2, and is arranged so as to include a plurality of the areas AR in the detection range RD.

That is, the area controller 12 is configured so as to determine presence or absence of a person in the detection range RD of the human detection sensor 14 based on a detection signal which is input through the signal line 16. In addition, the area controller 12 is configured so as to perform a lighting control of each lighting apparatus 13 which is provided in the plurality of areas AR included in the detection range RD of the human detection sensor 14 based on a determination result on presence or absence of a person in the detection range RD of the human detection sensor 14, and time information which is obtained from a clocking operation of the timer 12a.

### Operation

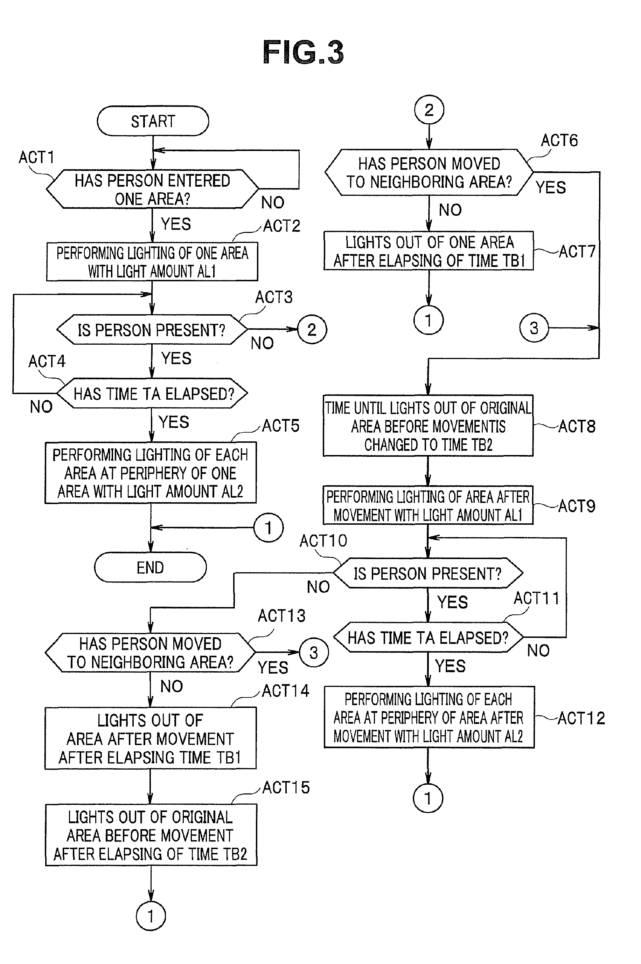

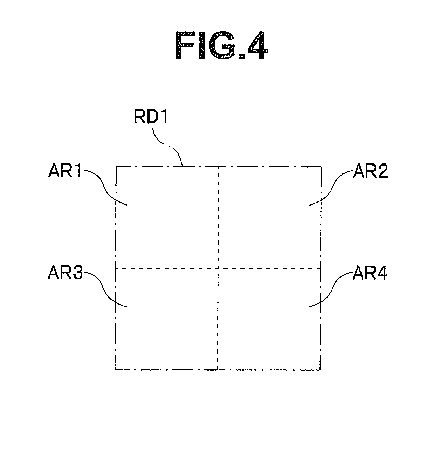

Subsequently, a lighting control operation of the area controller 12 will be described with reference to a flowchart in FIG. 3, or the like. Hereinafter, in order to make the descriptions simple, an example of a case in which four rectangular areas AR1 to AR4 are included in a rectangular detection range RD1 of the human detection sensor 14, as illustrated in FIG. 4, will be described. FIG. 3 is a flowchart which illustrates a lighting control operation according to the embodiment. FIG. 4 is a diagram which illustrates an example of the areas AR1 to AR4 as targets of the lighting control according to the embodiment.

First, the area controller 12 determines whether or not a person enters any one of the areas AR1 to AR4 which are included in the detection range RD1 of the human detection sensor 14 based on a detection signal which is input through the signal line 16 (ACT 1 in FIG. 3).

In addition, the area controller 12 maintains a stand-by state by repeating a determination process in ACT 1 in FIG. 3 until a determination result that a person enters any one of the areas AR1 to AR4 is obtained. In addition, upon obtaining a determination result that a person entered any one of the areas AR1 to AR4 through the determination process in ACT 1 in FIG. 3, the area controller 12 turns on the lighting apparatus 13 which is arranged in the one area with a light amount of AL1 after obtaining the determination result (ACT 2 in FIG. 3).

Thereafter, the area controller 12 determines whether or not a person is present in one area (ACT 3 in FIG. 3).

The area controller 12 determines whether or not a predetermined time TA elapsed after detecting presence of a person in one area based on time information which is obtained from a clocking operation of the timer 12a, when a determination result that a person is present in the one area is obtained (ACT 4 in FIG. 3).

Upon obtaining a determination result that a person is not present in one area in which the lighting apparatus 13 is turned on in ACT 2 in FIG. 3 through the determination process in ACT 3 in FIG. 3, the area controller 12 determines whether or not a person moved to an area neighboring the one area (ACT 6 in FIG. 3).

The area controller 12 turns on each lighting apparatus 13 which is arranged in each area at the periphery of one area in which the lighting apparatus 13 is turned on with the light amount AL2 which is equal to or smaller than the light amount AL1 in ACT 2 in FIG. 3, upon obtaining a determination result that the time TA elapsed, through the determination process in ACT 4 in FIG. 3 (ACT 5 in FIG. 3). In addition, the area controller 12 performs the determination process in ACT 3 in FIG. 3 again upon obtaining a determination result that the time TA did not elapse through the determination process in ACT 4 in FIG. 3.

On the other hand, when a determination result that a person did not move to the neighboring area is obtained from the determination process in ACT 6 in FIG. 3, the area controller 12 assumes that a person is not present in any of the areas AR1 to AR4 which are included in the detection range RD1, and performs a lights out control in which each of the lighting apparatuses 13 which is arranged in one area is turned off after elapsing of a predetermined time TB1 (<predetermined time TA), after detecting absence of a person in the one area in which the lighting apparatus 13 is turned on in ACT 2 in FIG. 3 (ACT 7 in FIG. 3). In addition, the predetermined time TB1 may be changed according to time from entering of a person in one area until detecting the absence of the person in the one area. That is, when presence of a person is detected only for a very short time, since it is assumed that the person is simply passing through, the lighting apparatus may be turned off in a short time after detecting the absence of a person by setting the predetermined time TB1 to be short. On the other hand, when a person stays in one area for a long time, it is preferable to set the predetermined time TB1 to be long, since there is a possibility that the person stays in the vicinity of the one area. In this manner, the predetermined time TB1 is set to be short when stay time of a person is short, and is set to be long when the stay time is long. Thus, it is possible to secure necessary lighting, and to reduce unnecessary lighting.

In addition, upon obtaining a determination result that a person moved to a neighboring area through the determination process in ACT 6 in FIG. 3, the area controller 12 changes time until turning off each lighting apparatus 13 which is arranged in the original area before movement (for example, one area in which lighting apparatus 13 is turned on in ACT 2 in FIG. 3) to a predetermined time TB2 (>predetermined time TA) from the predetermined time TB1 (ACT 8 in FIG. 3), and turns on each lighting apparatus 13 which is arranged in an area after movement with the light amount of AL1 (ACT 9 in FIG. 3).

Thereafter, the area controller 12 determines whether or not a person is present in the area after movement (ACT 10 in FIG. 3).

Upon obtaining a determination result that a person is present in an area after movement, the area controller 12 determines whether or not the predetermined time TA elapsed after detecting presence of a person in the area after movement based on time information which is obtained from a clocking operation of the timer 12a (ACT 11 in FIG. 3).

Upon obtaining a determination result that a person is not present in the area after movement in which the lighting apparatus 13 is turned on in ACT 9 in FIG. 3 through the determination process in ACT A11 in FIG. 3, the area controller 12 determines whether or not the person moved to an area neighboring the area after movement (ACT 13 in FIG. 3).

Upon obtaining a determination result that the time TA elapsed through the determination process in ACT 11 in FIG. 3, the area controller 12 turns on each lighting apparatus 13 which is arranged in each area at the periphery of the area after movement in which the lighting apparatus 13 is turned on in ACT 9 in FIG. 3 with a light amount AL2 which is equal to or smaller than the light amount AL1 (ACT 12 in FIG. 3). In addition, upon obtaining a determination result that the time TA did not elapse through the determination process in ACT 11 in FIG. 3, the area controller 12 performs the determination process in ACT 10 in FIG. 3 again.

That is, according to ACT 12 in FIG. 3, a control of lighting the original area before movement with the light amount AL2 is performed prior to a control of turning off each lighting apparatus 13 which is arranged in the original area before movement (for example, one area in which lighting apparatus 13 is turned on in ACT 2 in FIG. 3) after elapsing of the predetermined time TB2.

In addition, according to the embodiment, for example, when presence of a person is detected in any of two areas of the areas AR1 to AR4, respectively, and when movement of the person who is present in one area of the two areas for short stay time to the outside of the detection range RD1 is detected, a control of lighting the one area with the light amount AL2 may be performed prior to a control of turning on each lighting apparatus 13 in the one area with the light amount AL1 (before elapsing of predetermined time TB1).

On the other hand, upon obtaining a determination result that the person did not move to a neighboring area through a determination process in ACT 13 in FIG. 3, the area controller 12 assumes that the person is not present in any one of the areas AR1 to AR4 which are included in the detection range RD1, and performs a lights out control in which each lighting apparatus 13 which is arranged in the area after movement is turned off after elapsing of the predetermined time TB1 (<predetermined time TA), and each lighting apparatus 13 which is arranged in the original area before movement (for example, one area in which lighting apparatus 13 is turned on in ACT 2 in FIG. 3) is turned off after elapsing of the predetermined time TB2 (>predetermined time TA), after detecting the presence of the person in the area after movement in which the lighting apparatus 13 is turned on in ACT 9 in FIG. 3 (ACTS 14 and 15 in FIG. 3). In addition, upon obtaining a determination result that the person moved to a neighboring area through a determination process in ACT A13 in FIG. 3, the area controller 12 repeatedly performs processes after ACT 8 in FIG. 3.

As described above, according to the lighting control system of the embodiment, it is possible to perform an appropriate lighting control based on a detection result on presence or absence of a person in a plurality of areas.

In addition, according to the embodiment, the determination process and the clocking operation in the processes of the flowchart in FIG. 3 are not limited to be performed by the area controller 12, and for example, may be performed by any of the main control unit 11 and the human detection sensor 14.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A lighting control system which performs a lighting control with respect to each lighting apparatus arranged in a plurality of areas that are within a detection range of a human detection sensor, the system comprising:
a determination unit which determines presence of a person in any one area among the plurality of areas based on a detection result of the human detection sensor; and
a control unit which performs a control of turning on a lighting apparatus which is arranged in the one area with a first light amount, when a determination result that a person is present in the one area is obtained by the determination unit, and performs a control of turning on a lighting apparatus which is arranged in each area neighboring the one area with a second light amount which is equal to or smaller than the first light amount, when a person is present in the one area for a first predetermined time.

2. The system according to claim 1,
wherein, upon obtaining a determination result that a person is present in the one area, the determination unit further determines whether or not the person who entered the one area moved to an outside of the one area before elapsing of the first predetermined time, and
wherein, when the determination unit obtains a determination result that the person who entered the one area moved to the outside of the one area before elapsing of the first predetermined time, the control unit performs a control of turning off the lighting apparatus which is arranged in the one area after elapsing of a second predetermined time which is shorter than the first predetermined time, after obtaining the determination result.

3. The system according to claim 1,
wherein, when the determination unit obtains a determination result that a person is not present in an area neighboring an area in which a person is present, the control unit performs a lights out control of turning off a lighting apparatus in the neighboring area, and a control of lighting the neighboring area with the second light amount, prior to performing a control of turning on the lighting apparatus in the neighboring area with the first light amount.

4. The system according to claim 2,
wherein, when the determination unit obtains a determination result that a person is not present in the area neighboring an area in which a person is present, the control unit performs a lights out control of turning off a lighting apparatus in the neighboring area, and a control of lighting the neighboring area with the second light amount, prior to performing a control of turning on the lighting apparatus in the neighboring area with the first light amount.

5. The system according to claim 2,
wherein, upon obtaining a determination result that the person who entered the one area moved to the outside of the one area before elapsing of the first predetermined time, the determination unit further determines whether or not the person who entered the one area moved to another area which is neighboring, and
wherein, when the determination unit obtains a determination result that the person who moved to the outside of the one area moved to the other area, the control unit changes the second predetermined time until turning off the lighting apparatus which is arranged in the one area to a third predetermined time which is longer than the first predetermined time.

6. A lighting control method for performing a lighting control with respect to each lighting apparatus which is arranged in a plurality of areas included in a detection range of a human detection sensor, the method comprising:
determining presence of a person in any one area among the plurality of areas based on a detection result of the human detection sensor; and
controlling turning on of a lighting apparatus which is arranged at the one area with a first light amount, when a determination result that a person is present in the one area is obtained in the determining, and controlling turning on of a lighting apparatus which is arranged in each area neighboring the one area with a second light amount which is equal to or smaller than the first light amount, when a person is present in the one area for a first predetermined time.

7. The method according to claim 6,
wherein, in the determining, upon obtaining a determination result that a person is present in the one area, whether or not the person who entered the one area moved to the outside of the one area before elapsing of the first predetermined time is further determined, and
wherein, in the controlling, upon obtaining a determination result that the person who entered the one area moved to the outside of the one area before elapsing of the first predetermined time in the determining, a lights out control of turning off a lighting apparatus which is arranged in the one area after elapsing of a second predetermined time which is shorter than the first predetermined time, after obtaining the determination result is performed.

8. The method according to claim 6,
wherein, in the controlling, upon obtaining a determination result that a person is not present in an area neighboring an area in which a person is present in the determining, a control of turning off a lighting apparatus in the neighboring area, and a control of lighting the neighboring area with the second light amount prior to a control of turning on the lighting apparatus in the neighboring area with the first light amount are performed.

9. The method according to claim 7,
wherein, in the controlling, upon obtaining a determination result that a person is not present in an area neighboring an area in which the person is present in the determining, a lights out control of turning off a lighting apparatus in the neighboring area, and a control of lighting the neighboring area with the second light amount prior to a control of turning on the lighting apparatus in the neighboring area with the first light amount are performed.

10. The method according to claim 7,
wherein, upon obtaining a determination result that the person who entered the one area moved to the outside of the one area before elapsing of the first predetermined time, the determining further determines whether or not the person who entered the one area moved to another area which is neighboring, and
wherein, in the controlling, upon obtaining a determination result that the person who moved to the outside of the one area moved to the other area in the determining, the second predetermined time until turning off the lighting apparatus which is arranged in the one area is changed to a third predetermined time which is longer than the first predetermined time.
